# EUROPÄISCHE PATENTANMELDUNG

(11) **EP 1 046 854 A2**
(43) Veröffentlichungstag der Anmeldung: **25.10.2000**
(21) Anmeldenummer: 00105932.8
(22) Anmeldetag: 23.03.2000
(51) Int. Cl.: F16L 37/084, F16L 21/08

(54) **Muffenverbindung zur Verbindung zweier Rohre und Verriegelungsvorrichtung für eine Muffenverbindung**

(30) Priorität: 24.04.1999 DE 19918717
(71) Anmelder: Tiroler Röhren- und Metallwerke Aktiengesellschaft, A-6060 Hall (AT)
(72) Erfinder: Mutschlechner, Hermann, 6063 Rum (AT); Maurer, Reinhold, 6020 Innsbruck (AT)
(74) Vertreter: Lindner, Michael, Dipl.-Ing.

(57) **Zusammenfassung**

Die vorliegende Erfindung betrifft eine Muffenverbindung zur Verbindung zweier Rohre, Rohrformstücke oder dgl., mit einem dem einen Rohr (14) zugeordneten Muffenende (16), in das ein Spitzende (60) des anderen eine Stützleiste (64) aufweisenden Rohrs (62) einführbar ist und das einen radial nach Innen ragenden Rand (20) mit zumindest einer ringsegmentförmigen Ausnehmung (26) aufweist, und mit einer Verriegelungsvorrichtung (40) zum Verriegeln des Spitzendes (60) in dem Muffenende (16), indem sich die Stützleiste (64) an der Verriegelungsvorrichtung (40) und diese an dem Rand (20) abstützt, wobei die Verriegelungsvorrichtung (40) zumindest zwei ringsegmentförmige Verriegelungselemente (42, 44) und ein Halteelement (46) umfaßt. Die Muffenverbindung zeichnet sich dadurch aus, daß die beiden Verriegelungselemente (42, 44) an jeweils einem Ende (49) ein in axialer Richtung sich erstreckendes Anschlagelement (50) mit einer in Umfangsrichtung sich erstreckenden Nase (56) umfassen, wobei die Anschlagelemente (50) in die Ausnehmung (26) des Randes (20) ragen und als Anschlag dienen, und das Halteelement (46) aus einem flexiblen Material unabhängig von den beiden Verriegelungselementen (42, 44) vorgesehen ist und als Abstandshalter für die beiden Verriegelungselemente (42, 44) dient.

## Beschreibung

Die Erfindung betrifft eine Muffenverbindung zur Verbindung zweier Rohre, Rohrformstücke oder dergleichen, mit einem dem einen Rohr zugeordneten Muffenende, in das ein Spitzende des anderen, eine Stützleiste aufweisenden Rohrs einführbar ist und das einen radial nach innen ragenden Rand mit zumindest einer ringsegemtförmigen Ausnehmung aufweist, und mit einer Verriegelungsvorrichtung zum Verriegeln des Spitzendes in dem Muffenende, indem sich die Stützleiste an der Verriegelungsvorrichtung und diese an dem Rand abstützt, wobei die Verriegelungsvorrichtung zumindest zwei ringsegmentförmige Verriegelungselemente und ein Halteelement umfaßt. Die Erfindung betrifft darüber hinaus eine solche Verriegelungsvorrichtung.

Muffenverbindungen der vorgenannten Art sind allgemein bekannt. Sie dienen zur gummigedichteten Verbindung zweier zumeist unter Druck stehender Rohre. Zur Zugsicherung weisen diese bekannten Muffenverbindungen Verriegelungsvorrichtungen auf, die verhindern, daß das Spitzende des einen Rohrs aus dem Muffenende des anderen Rohrs herausgezogen werden kann.

Eine solche Verriegelungsvorrichtung umfaßt zwei aus Metall gefertigte Verriegelungselemente bzw. Ringsegmente, die jeweils an einem Ende einen als Anschlag dienenden Vorsprung (Anschlagelement) aufweisen. Einer der beiden auch als Riegel bezeichneten Ringsegmente weist einen an den Vorsprung angeschweißten Sicherungsdraht auf, der sich in axialer Richtung versetzt zu dem Ringsegment in Umfangsrichtung weiter erstreckt. Dieser Sicherungsdraht soll bei eingelegten Ringsegmenten als Abstandshalter dienen.

Zur Erzielung einer Muffenverbindung wird das Spitzende zunächst in das Muffenende bis zum Anschlag an dem Muffengrund eingeschoben. Anschließend wird das Ringsegement ohne Sicherungsdraht in die Muffenausnehmung eingelegt und im Uhrzeigersinn solange verschoben, bis der Vorsprung am Rand der Ausnehmung anschlägt. Das Ringsegment stützt sich in dieser Position in radialer Richtung an dem Spitzende des Rohrs ab und in axialer Richtung einerseits an der Stützleiste und andererseits an der Innenseite des Randes des Muffenendes.

Anschließend wird das zweite Ringsegment ebenfalls in die Ausnehmung des Muffenendes eingelegt und entgegen dem Uhrzeigersinn verschoben bis der Vorsprung an einem Rand der Ausnehmung anschlägt. Auch dieses Ringsegment stützt sich in radialer als auch in axialer Richtung in gleicher Weise ab wie das erste Ringsegement.

Um zu verhindern, daß die beiden Ringsegmente sich ungewollt verschieben und möglicherweise aus dem Muffenende herausfallen, wird der Sicherungsdraht so in die Ausnehmung des Muffenendes hinein gebogen, daß dessen Ende als Anschlag für das andere Ringsegment dient. Der Sicherungsdraht wirkt somit als Abstandshalter bezüglich der beiden Ringsegmente.

Obgleich sich diese Verriegelungsvorrichtung in der Praxis sehr bewährt hat, besteht selbstverständlich weiterhin das Bedürfnis, sowohl die Handhabung dieser Verriegelungsvorrichtung zu verbessern als auch die Herstellungskosten zu minimieren. Insbesondere erschwert die notwendige Verwendung eines Werkzeugs zum Einbiegen des Sicherungsdrahts in die Ausnehmung die Handhabung an der Baustelle. Ferner erfordert das Anschweißen des Sicherungsdrahtes einen weiteren Herstellungsschritt, der zu zusätzlichen Kosten führt, insbesondere auch aufgrund der unterschiedlichen Materialien von Ringsegment und Sicherungsdraht.

Vor diesem Hintergrund besteht die Aufgabe der vorliegenden Erfindung darin, die Muffenverbindung der eingangs erwähnten Art so weiter zu bilden, daß sich die Handhabung vereinfacht und die Herstellungskosten gesenkt werden.

Die der Erfindung zugrunde liegende Aufgabe wird dadurch gelöst, daß die Muffenverbindung der eingangs genannten Art so weitergebildet wird, daß die beiden Verriegelungselemente an jeweils einem Ende ein in axialer Richtung sich erstreckendes Anschlagelement mit einer in Umfangsrichtung sich erstreckenden Nase umfassen, wobei die Anschlagelemente in die Ausnehmung des Randes ragen und als Anschlag dienen, und das Halteelement aus einem flexiblen Material unabhängig von den beiden Verriegelungselementen vorgesehen ist und als Abstandshalter für die beiden Verriegelungselemente dient.

Der Einsatz eines von den Verriegelungselementen unabhängigen, d.h. nicht mit diesen verbundenen Halteelements aus einem flexiblen Material hat den Vorteil, daß der aufwendige Schweißvorgang, der bisher zur Verbindung des Sicherungsdrahts mit einem der beiden Verriegelungselemente notwendig war, entfällt. Damit sind bei der Fertigung Kostenersparnisse erzielbar.

Ein weiterer Vorteil ist darin zu sehen, daß an der Baustelle zum Einlegen der Verriegelungselemente keine Werkzeuge mehr notwendig sind. Vielmehr läßt sich das Halteelement aufgrund seiner flexiblen und elastischen Materialeigenschaft sehr einfach per Hand in die Ausnehmung einlegen, wobei die an den Anschlagelementen der Verriegelungselemente vorgesehenen Nasen verhindern, daß das Halteelement aus der Ausnehmung herausfallen kann.

Die der Erfindung zugrunde liegende Aufgabe wird somit also vollkommen gelöst.

In einer bevorzugten Weiterbildung ist das Halteelement aus einem Kunststoff, vorzugsweise aus EPDM (Äthylen-Propylen-Terpolymerisat) hergestellt. Die Herstellung des Halteelements aus Kunststoff ist insbesondere unter Kostengesichtspunkten vorteilhaft. Der Einsatz von EPDM hat den Vorteil, daß dieses Material einerseits die notwendige Flexibilität aufweist, um das Halteelement über die beiden Nasen hinweg führen zu können, und andererseits eine außergewöhnlich gute Beständigkeit gegen Sauerstoff, Ozon sowie weiteren äußeren Witterungseinflüssen besitzt, was gerade bei im Erdreich verlegten Druckrohren von großer Wichtigkeit ist.

In einer bevorzugten Weiterbildung sind die Verriegelungselemente aus Metall, vorzugsweise aus einem Gußmaterial, oder einem druckbeständigen Kunststoffmaterial hergestellt.

Dies hat den Vorteil, daß aufgrund der Festigkeit des Materials hohe Zugkräfte aufnehmbar sind.

Vorzugsweise ist das Halteelement gerade ausgebildet und besitzt einen kreisförmigen Querschnitt.

Dies hat den Vorteil, daß das Halteelement unabhängig von dem Durchmesser des Rohrs ausgebildet werden kann. Vielmehr läßt sich das Halteelement aufgrund seiner Flexibilität beim Einbau in die gewünschte Ringsegmentform biegen.

Die der Erfindung zugrunde liegende Aufgabe wird auch von einer Verriegelungsvorrichtung der eingangs genannten Art gelöst, die sich dadurch auszeichnet, daß jedes Verriegelungselement an einem Ende ein in axialer Richtung sich erstreckendes Anschlagelement aufweist, das seinerseits an seiner dem Verriegelungselement abgewandten Seite ein in Umfangsrichtung vorspringende Nase umfaßt, und daß das Halteelement aus einem flexiblen Material unabhängig von den Verriegelungselementen vorgesehen ist.

Mit dieser Verriegelungsvorrichtung lassen sich, wie zuvor bereits erläutert, eine Vereinfachung bei der Montage und eine Verringerung der Herstellungskosten erzielen.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand eines Ausführungsbeispiels mit Bezug auf die Zeichnung näher erläutert. Dabei zeigen:
- Fig. 1: eine perspektivische Ansicht einer Muffenverbindung,
- Fig. 2: eine Darstellung der Muffenverbindung im Querschnitt, und
- Fig. 3: eine schematische Darstellung der Muffenverbindung in einem Längsschnitt.

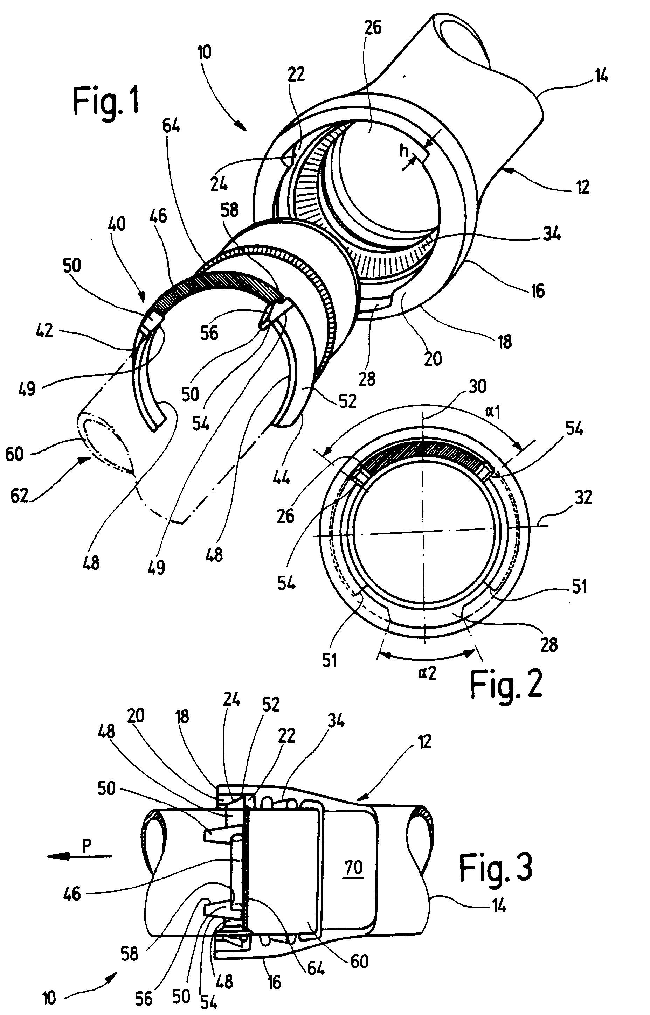

In Fig. 1 ist eine Muffenverbindung mit dem Bezugszeichen 10 gekennzeichnet. Diese Muffenverbindung 10 umfaßt ein Muffenstück 12, das entweder integraler Bestandteil eines Rohres 14 oder mit einem solchen Rohr 14 verbindbar ist. Der Einfachheit halber wird nachfolgend immer von einem Rohr gesprochen. Es versteht sich, daß statt dem Rohr 14 selbstverständlich auch Ein Formstück oder dgl. verwendbar ist. Das Muffenstück 12 weist einen Längsabschnitt auf, der als Muffenende 16 bezeichnet wird und einen gegenüber dem Innendurchmesser des Rohres 14 vergrößerten Innendurchmesser aufweist. Das Muffenende 16 weist an seiner Stirnseite 18 einen flanschartigen Rand 20 auf, der sich in radialer Richtung um eine Länge h nach innen erstreckt. Dieser Rand 20 ist an der Stirnseite 18 eben ausgebildet, während er an der Innenseite 22 konisch verläuft, so daß der Innendurchmesser des Randes 20 an der Stirnseite 18 kleiner ist als der Innendurchmesser des Randes 20 auf der Innenseite 22. Es bildet sich somit eine bezüglich der Längsachse schräg verlaufende innere Ringfläche 24 aus.

Der Rand 20 umfaßt in dem vorliegenden Ausführungsbeispiel zwei Ausnehmungen 26, 28, die sich über einen vorgegebenen Kreiswinkel α1 bzw. α2, wie in Fig. 2 angedeutet, erstrecken. Diese Ausnehmungen haben ferner eine radiale Erstreckung von h. Wie sich aus der Fig. 2 ergibt, ist der Kreiswinkel α1 der Ausnehmung 26 größer als der Kreiswinkel α2 der Ausnehmung 28. Ab einem bestimmten Durchmesser des Rohrs 14 werden die Kreiswinkel der Ausnehmungen 26, 28 jedoch gleich groß gemacht. Beide Ausnehmungen 26, 28 sind jeweils symmetrisch zu einer vertikalen Achse 30 und zueinander symmetrisch bezüglich einer horizontalen Achse 32 angeordnet.

Fig. 1 läßt noch eine Ringdichtung 34 erkennen, die in einer nicht zu erkennenden Ringnut auf der Innenseite des Muffenendes 16 liegt und sich in radialer Richtung nach innen erstreckt. Diese Dichtung ist vorzugsweise aus EPDM (Äthylen-Propylen-Terpolymerisat) hergestellt.

Zu der Muffenverbindung 10 gehört ferner eine Verriegelungsvorrichtung 40, die -im vorliegenden Ausführungsbeispiel- zwei Verriegelungselemente 42, 44, und ein Halteelement 46 umfaßt. Bei größeren Durchmessern der zu verbindenden Rohre können auch bspw. auch vier Verriegelungselemente eingesetzt werden. Die beiden Verriegelungselemente weisen jeweils einen Grundkörper 48 auf, der sich ringsegmentförmig erstreckt und an einem Längsende 49 ein Anschlagelement 50 aufweist.

Der Grundkörper 48 weist einen nahezu trapezförmigen Querschnitt auf, so daß sich eine radial außen liegende Fläche 52 ergibt, die schräg zur Längsachse der Muffenverbindung verläuft. Diese Fläche 52 ist -was in der Figur nicht zu erkennen ist- in axialer Richtung gekrümmt (kalottenförmig) ausgebildet. Der Grundkörper 48 weist eine in radialer Richtung gesehene größere Dicke an seinem dem Muffenende zugewandten Rand als an seinem vorne liegenden Rand.

Das Anschlagelement 50 ist am Längsende 49 des Grundkörpers 48 bündig an dessen hinterer Seite angeordnet, während es sich in axialer Richtung über die vordere Fläche des Grundkörpers hinaus erstreckt. Damit bildet sich eine in einer axialen Ebene liegende Anschlagfläche 54 aus.

Auf der der Anschlagfläche gegenüber liegenden Fläche des Anschlagelements 50 ist eine Nase 56 ausgebildet, die eine Stufe 58 formt.

Das Halteelement 46 ist gerade ausgebildet und nimmt in seinem eingesetzten Zustand die Form eines Ringsegment an. Ferner weist es einen kreisförmigen Querschnitt auf. Das Halteelement 46 ist aus einem flexiblen und elastischen Material, im vorliegenden Ausführungsbeispiel aus EPDM hergestellt, so daß es sich aus der geraden Form in die dargestellte Ringsegmentform elastisch verformen läßt.

Wie sich aus Fig. 1 ergibt, liegen die beiden Verriegelungselemente 42, 44 und das Halteelement 46 an einem Spitzende 60 eines Rohrs 62 an. D.h. also, daß der Innendurchmesser der Verriegelungselemente 42, 44 etwa dem Außendurchmesser des Rohrs 62 entspricht. Die Erstreckung der beiden Verriegelungselemente 42, 44 in Umfangsrichtung ist etwas kleiner als α1. Auch die Erstreckung des Halteelements 46 in Umfangsrichtung ist kleiner als dieser Winkel α1.

Das Spitzende 60 des Rohrs 62 weist eine Stützleiste 64 auf, die sich in einer zur Längsachse des Rohrs senkrechten Ebene liegend über einen gesamten Rohrumfang erstreckt. Vorzugsweise ist diese Stützleiste als Schweißraupe ausgeführt. Diese Stützleiste 64 dient dazu, den Außendurchmesser des Spitzendes 60 zu vergrößern. Der Außendurchmesser der Stützleiste 64 und der Innendurchmesser der beiden Verriegelungselemente 42, 44 müssen so aufeinander abgestimmt sein, daß der Außendurchmesser der Stützleiste den Innendurchmesser der Verriegelungselemente um einen vorgegebenen Wert übersteigt.

Fig. 3 zeigt die mit Bezug auf die Fig. 1 erläuterte Muffenverbindung in verriegeltem Zustand. Dabei wurden gleiche bereits mit Bezug auf die Fig. 1 beschriebene Elemente mit den gleichen Bezugszeichen gekennzeichnet, so daß auf eine nochmalige Beschreibung dieser Teile verzichtet wird.

Das Spitzende 60 ist in das Muffenende 16 derart eingeführt, daß das Ende des Spitzendes 60 am Muffengrund anschlägt. Die Ringdichtung 34 umgibt dabei das Spitzende vollständig und dichtet einen Innenraum 70 des Muffenendes 60 nach außen ab. Um zu verhindern, daß das Spitzende 60 wieder aus dem Muffenende 16 herausgezogen werden kann, ist die Verriegelungsvorrichtung 40 in das Muffenende 16 eingesetzt. Dabei liegt die schräge kalottenförmige Fläche 52 der beiden Verriegelungselemente 42, 44 an der ebenfalls schräg verlaufenden Ringfläche 24 des Randes 20 an. Die Stützleiste 64 liegt an der dem Innenraum 70 zugewandten hinteren Fläche der beiden Verriegelungselemente 42, 44 an, da der Außendurchmesser der Stützleiste 64 größer ist als der Innendurchmesser der auf dem Spitzende aufliegenden Verriegelungselemente 42, 44. Somit wird eine in Richtung des Pfeiles P wirkende Zugkraft über die beiden Verriegelungselemente 42, 44 von dem Rand 20 des Muffenendes 16 aufgenommen. Das Rohr 60 kann also nicht mehr herausgezogen werden.

Die Montage dieser Muffenverbindung 10 wird wie folgt durchgeführt:

Nach entsprechender Reinigung des Spitzendes 60 wird dieses in das Muffenende 16 soweit eingeführt, bis es am Muffengrund anschlägt. Während des Einführens schmiegt sich die Dichtung 34 an die Oberfläche des Spitzendes 60 an.

Anschließend wird das erste Verriegelungselement 42 durch die Ausnehmung 26 in axialer Richtung eingeschoben und dann in entgegengesetztem Uhrzeigersinn in Umfangsrichtung verschoben bis die Anschlagfläche 54 des Anschlagelements 50 an der in der Fig. 1 linken Kante der Ausnehmung 26 anschlägt. Während dieses Verschiebens gleitet die Fläche 52 des Verriegelungselements 42 an der Fläche 24 des Randes 20 entlang. Wie sich aus der Fig. 2 ergibt, endet dabei das dem Längsende 49 gegenüber liegende Ende 51 noch vor der Ausnehmung 28.

Als nächstes wird das zweite Verriegelungselement 44 in die Ausnehmung 26 eingelegt, so daß die Fläche 52 hinter der Fläche 24 des Randes 20 liegt. Danach wird das Verriegelungselement 44 im Uhrzeigersinn verschoben bis die Anschlagfläche 54 an der in Fig. 1 rechten Kante der Ausnehmung 26 anschlägt. Auch hier endet das dem Längsende gegenüber liegende Ende 51 des Verriegelungselements 44 vor der Ausnehmung 28, wie in Fig. 2 zu erkennen ist.

Damit ist das Rohr 60, wie in Fig. 3 gezeigt, bereits verriegelt. Um jedoch zu verhindern, daß sich die beiden Verriegelungselemente 42, 44 wieder zurück verschieben und möglicherweise sogar aus der Ausnehmung 26 herausfallen, wird das Halteelement 46 etwas zusammengedrückt und über die beiden Nasen 56 der Anschlagelemente 50 hinweg in die Ausnehmung 26 eingelegt. Diese Verformung bildet sich dann wieder zurück, so daß das Halteelement 46 jeweils mit einem Ende an einem der beiden Verriegelungselemente bzw. den Anschlagelementen 50 anliegt. Das Halteelement 46 sorgt also dafür, daß sich der Abstand zwischen den beiden Verriegelungselementen 42, 44 im Bereich der Ausnehmung 26 nicht verringern kann. Das Halteelement 46 dient somit als Abstandshalter. Mit Hilfe der beiden Nasen 56, insbesondere der Stufen 58 wird dafür gesorgt, daß das Halteelement 46 nicht aus der Ausnehmung 26 herausfallen kann. Dies ist insbesondere in Fig. 3 sehr deutlich zu erkennen.

Es zeigt sich also, daß die Verriegelungsvorrichtung 40 sehr einfach handzuhaben ist und insbesondere ohne Verwendung von Werkzeug einlegbar und fixierbar ist. Das Halteelement 46 läßt sich manuell ohne Aufwand sehr einfach einlegen. Darüber hinaus ist es nicht mehr erforderlich, an eines der beiden Verriegelungselemente 42, 44 einen Sicherungsdraht anzuschweißen, was aufgrund der unterschiedlichen Materialien, nämlich duktiles Gußeisen einerseits und Stahl andererseits, schwierig und damit kostenintensiv war.

Es versteht sich, daß Modifikationen und Änderungen der beschriebenen Verriegelungsvorrichtung denkbar sind, ohne den Rahmen der vorliegenden Erfindung zu verlassen. So ist es beispielsweise denkbar, die an den Anschlagelementen vorgesehenen Nasen durch andere Mittel entweder am Verriegelungselement selbst oder am Halteelement zu ersetzen, um das Herausfallen des Halteelements 46 aus der Ausnehmung zu verhindern. Darüber hinaus kann die Verriegelungsvorrichtung bei größeren Rohrdurchmessern auch bspw. vier Verriegelungselemente umfassen, so daß jeweils ein Paar von Verriegelungselementen den beschriebenen beiden Verriegelungselementen 42, 44 entspricht.

## Patentansprüche

1. Muffenverbindung zur Verbindung zweier Rohre, Rohrformstücke oder dgl., mit
einem dem einen Rohr (14) zugeordneten Muffenende (16), in das ein Spitzende (60) des anderen eine Stützleiste (64) aufweisenden Rohrs (62) einführbar ist und das einen radial nach Innen ragenden Rand (20) mit zumindest einer ringsegmentförmigen Ausnehmung (26) aufweist, und
einer Verriegelungsvorrichtung (40) zum Verriegeln des Spitzendes (60) in dem Muffenende (16), indem sich die Stützleiste (64) an der Verriegelungsvorrichtung (40) und diese an dem Rand (20) abstützt, wobei die Verriegelungsvorrichtung (40) zumindest zwei ringsegmentförmige Verriegelungselemente (42, 44) und ein Halteelement (46) umfaßt,
dadurch gekennzeichnet, daß
die Verriegelungselemente (42, 44) an jeweils einem Ende (49) ein in axialer Richtung sich erstreckendes Anschlagelement (50) mit einer in Umfangsrichtung sich erstreckenden Nase (56) umfassen, wobei die Anschlagelemente (50) in die Ausnehmung (26) des Randes (20) ragen und als Anschlag dienen, und
das Halteelement (46) aus einem flexiblen Material unabhängig von den beiden Verriegelungselementen (42, 44) vorgesehen ist und als Abstandshalter für die beiden Verriegelungselemente (42, 44) dient.

2. Muffenverbindung nach Anspruch 1, dadurch gekennzeichnet, daß das Halteelement (46) aus einem Kunststoff, vorzugsweise EPDM (Äthylen-Propylen-Terpolymerisat) hergestellt ist.

3. Muffenverbindung nach Anspruch 1 oder 2, dadurch gekennzeichnet, daß die Verriegelungselemente (42, 44) aus Metall, vorzugsweise einem duktilen Gußeisen, oder einem druckbeständigen Kunststoff hergestellt sind.

4. Muffenverbindung nach einem der vorhergehenden Ansprüche, dadurch gekennzeichnet, daß das Haltelement (46) gerade ausgebildet ist, sich in eine Ringsegmentform biegen läßt und einen kreisförmigen Querschnitt hat.

5. Verriegelungsvorrichtung (40) für eine zwei Rohre (14, 62), Rohrformstücke oder dgl. verbindende Muffenverbindung (10), wobei sich zum Verriegeln eine Stützleiste (64) an einem Rohr (62) an der Verriegelungsvorrichtung (40) und diese an einem radial nach innen ragenden Rand (20) eines Muffenendes (16) abstützt, mit zumindest zwei ringsegmentförmigen Verriegelungselementen (42, 44) und einem Halteelement (46), dadurch gekennzeichnet, daß jedes Verriegelungselement (42, 44) an einem Ende (49) ein in axialer Richtung sich erstreckendes Anschlagelement (50) aufweist, das seinerseits an seiner dem Verriegelungselement (42, 44) abgewandten Seite eine in Umfangsrichtung vorspringende Nase (56) umfaßt, und das Halteelement (46) aus einem flexiblen Material unabhängig von den Verriegelungselementen (42, 44) vorgesehen ist.

6. Verriegelungsvorrichtung nach Anspruch 5, dadurch gekennzeichnet, daß das Halteelement (46) aus einem Kunststoff, vorzugsweise EPDM, und/oder die Verriegelungselemente (42, 44) aus einem Metall, vorzugsweise einem duktilen Gußeisen oder aus einem druckbeständigen Kunststoff hergestellt sind.
